**Europäisches Patentamt**

**European Patent Office**

**Office européen des brevets**

(11) Numéro de publication: **0 425 351 A1**

# DEMANDE DE BREVET EUROPEEN

(21) Numéro de dépôt: **90402945.1**

(22) Date de dépôt: **19.10.90**

(51) Int. Cl.⁵: **G01T 1/208**, G01T 1/17, G01T 7/12

(30) Priorité: **23.10.89 FR 8913838**

(43) Date de publication de la demande:
**02.05.91 Bulletin 91/18**

(84) Etats contractants désignés:
**DE ES GB**

(71) Demandeur: **COMMISSARIAT A L'ENERGIE ATOMIQUE**
**31-33, rue de la Fédération**
**F-75015 Paris(FR)**

(72) Inventeur: **Talent, Bernard**
**18 rue des Prébandes**
**F-37600 Loches(FR)**
Inventeur: **Basset, Claude**
**Résidence Bellevue, Esc. D**
**F-91220 Bretigny Sur Orge(FR)**

(74) Mandataire: **Mongrédien, André et al**
**c/o BREVATOME 25, rue de Ponthieu**
**F-75008 Paris(FR)**

(54) Contrôleur de contamination et procédé pour sa mise en oeuvre.

㊼ Contrôleur de contamination et procédé pour sa mise en oeuvre. Une sonde de détection (10) est connectée à des moyens de traitement (20) comportant des moyens (24) de mise en forme des impulsions délivrées par la sonde (10) sous l'effet d'un rayonnement, des moyens de comptage (26) et un microprocesseur (36). Le microprocesseur (36) calcule une valeur moyenne du nombre d'impulsions comptées par seconde et détermine un indicateur d'évolution instantanée du nombre d'impulsions comptées par seconde.

Application à la détection de rayonnements alpha, bêta, gamma et X.

## CONTROLEUR DE CONTAMINATION ET PROCEDE POUR SA MISE EN OEUVRE

La présente invention a pour objet un controleur de contamination et un procédé pour sa mise en oeuvre. Elle permet la détection et l'analyse de rayonnements alpha, bêta, gamma et X.

On connaît des contrôleurs de contamination comme l'appareil commercialisé sous la référence CAB TROP par la Société Thomson CSF ou l'appareil connu sous la référence LON 307 commercialisé par la Société Nardeux. Dans ces appareils, une sonde différente selon le type de rayonnement à détecter délivre des impulsions électriques en nombre proportionnel au nombre de corpuscules détectés.

Ces impulsions sont ensuite comptées, l'information délivrée étant le nombre d'impulsions par seconde.

Les appareils connus n'indiquent pas la tendance de l'évolution de la mesure au cours du temps. Pourtant cette tendance est importante ; lors d'un contrôle elle permet à l'utilisateur de se diriger vers un objet contaminé. Elle indique aussi l'éventualité d'un danger imminent en cas de mesure de fortes contaminations.

De plus, ces appareils connus manquent de précision lorsque le nombre d'impulsions détectées est faible.

A l'opposé, après une saturation due à un nombre d'impulsions trop élevé, ces appareils ne fournissent plus aucune information.

Ces appareils présentent une consommation électrique élevée qui nuit à leur autonomie.

Le contrôleur de contamination conforme à la présente invention pallie ces divers inconvénients. Il utilise des moyens de traitement comprenant avantageusement un microprocesseur qui effectue diverses opérations rendant l'information délivrée complète et précise.

La présente invention concerne donc un contrôleur de contamination comportant :
- une sonde de détection délivrant sur une sortie des impulsions électriques sous l'effet d'un rayonnement,
- des moyens de traitement des impulsions électriques connectés à la sortie de la sonde.

Ces moyens de traitement comportent :
- des moyens de mise en forme des impulsions délivrant sur une sortie des impulsions électriques de largeur calibrée,
- des moyens de comptage des impulsions calibrées reliés par une entrée à la sortie des moyens de mise en forme et délivrant régulièrement sur une sortie des signaux numériques de comptage,
- des moyens de commande des moyens de comptage,
- des moyens d'enregistrement des signaux numériques de comptage,
- des moyens pour effectuer à chaque enregistrement d'un signal numérique de comptage, plusieurs moyennes à partir des signaux numériques de comptage enregistrés,
- des moyens pour enregistrer ces moyennes,
- des moyens de comparaison entre ces moyennes et des facteurs statistiques, aux fins de déterminer un nombre moyen d'impulsions délivrées par la sonde par secondes et un indicateur de tendance d'évolution dudit nombre moyen d'impulsions par seconde,
- des moyens pour afficher un nombre instantané d'impulsions délivrées par la sonde, ledit nombre moyen d'impulsions par seconde, et ledit indicateur de tendance.

Avantageusement, les fonctions de commande, d'enregistrement, de calcul de moyennes et de comparaisons sont assurées par un microprocesseur et ses périphériques usuels.

Préférentiellement, le contrôleur de contamination comprend des moyens pour engendrer plusieurs signaux à des fréquences acoustiques, et des moyens de signalisation sonore connectés aux moyens pour engendrer des signaux à des fréquences acoustiques.

Ces moyens peuvent émettre des impulsions sonores à chaque impulsion électrique reçue par les moyens de traitement. Ainsi, lorsque le nombre des impulsions électriques est faible, l'utilisateur n'est pas obligé de fixer son attention sur les moyens d'affichage et peut guider sa recherche de contamination à l'aide des signaux sonores.

Selon un mode de réalisation préféré, les moyens de traitement comportent une source d'alimentation de basse tension, cette basse tension étant délivrée sur une sortie reliée à une entrée de la sonde. Cette dernière comporte des moyens pour transformer la basse tension en haute tension pour alimenter un système de détection de rayonnement.

De cette manière, la haute tension n'est pas transportée d'une source à la sonde. Cela permet de réduire les risques d'accidents.

La présente invention concerne aussi un procédé de mise en oeuvre du contrôleur de contamination.

Le procédé consiste à :
- enregistrer, à une cadence déterminée, dans des moyens d'enregistrement les signaux numériques de comptage, cet enregistrement provoquant la remise à zéro des moyens de comptage,
- effectuer plusieurs moyennes des nombres d'impulsions enregistrés successivement sur une gamme de durées déterminées,

- choisir parmi ces moyennes, celles correspondant à la plus longue durée et respectant des critères de stabilité déterminés.

De manière préférée, uatre moyennes M1, M2, M3, M4 sont effectuées sur d s durées respectives égales à 1s, 2s, 5s, 10s.

De manière préférée, la cadence d'enregistrement est de 4 Hz. C'est-à-dire qu'une mesure est effectuée toutes les 250 ms : étant donné les temps d'évolution typique des mesures effectuées, on peut considérer que celles-ci s nt instantanées.

Dans une variante de réalisation du procédé selon l'invention, on détermine un indicateur d'évolution instantanée par comparaison d'une moyenne des nombres d'impulsions a ec des facteurs statistiques.

De manière préférée, lorsque la moyenne choisie est supérieure ou égale à une valeur limite, la moyenne M1 est comparée aux facteurs statistiques. Lorsque la moyenne choisie est inférieure à cette valeur limite, c'est M2 qui est comparée aux facteurs statistiques.

Cette valeur limite e t préférentiellement égale à 0,8 impulsion/seconde.

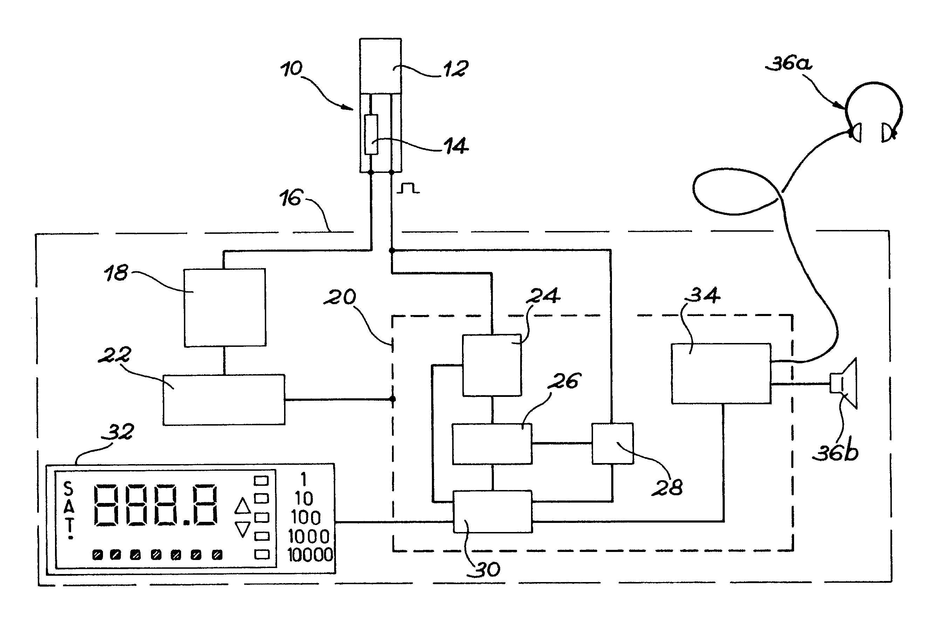

De toute façon, les caractéristiques et avantages de l'invention apparaîtront mieux après la description qui suit donnée à titre indicatif et nullement limitatif. Cette description se réfère à un dessin annexé sur lequel :
la figure unique représente schématiquement un dispositif selon l'invention.

Le contrôleur de contamination permet de détecter toutes sortes de rayonnements : alpha, gamma, X, bêta, bêta-gamma grâce à une gamme importante de sondes de détection 10 adaptables.

Ces sondes 10 sont usuelles et connues de l'homme du métier. On trouve une description d'un type de sonde dans le brevet français n° 2 603 706 déposé. au nom du Commissariat à l'Energie Atomique (C.E.A.).

Sans entrer dans des détails inutiles à la compréhension de la présente invention, il suffit de savoir que ces sondes comportent un ensemble de détection 12 (un photoscintillateur couplé à un phtomomultiplicateur ou un compteur Geiger-Müller ou analogue) délivrant des impulsions électriques sur une sortie après un traitement électronique approprié : chacune des sondes est adaptée à un type de rayonnement particulier et co porte donc un moyen de discrimination entre les excitations issues des divers rayonnements.

Dans une réalisation conforme à l'invention, la sonde de détection 10 comport des moyens 14 pour transformer une basse tension en haute tension, connectés à l'ensemble de détection 12. On évite ainsi le transport d'une haute tension dans un câble de connexion, et les dangers y afférents.

La sonde 10 est dou lement connectée à un boîtier 16 comprenant d'une part une source d'alimentation de basse tension 18 et d'autre part des moyens de traitement 20 des impulsions délivrées par la sonde 10.

Ce boîtier 16, comme le différentes sondes, est étanche de manière à permettre son utilisation par tous les temps ou sur des sites très humides.

La source d'alimentation de basse tension délivre une tension de 12 V par exemple. Elle est connectée à une source d'alimentation générale 22 constituée par un ensemble de piles électriques ou par un ensemble de batteries ou encore par le secteur.

Cette source d'alimentation générale 22 sert aussi à l'alimentation électrique des moyens de traitement 20.

Les impulsions électriques délivrées par la sonde 10 ne présentent pas toutes une même largeur, ce qui est préjudiciable à leur traitement. Des moyens de mise en forme 24 permettent la calibration de ces impulsions. Ces moyens 24 les transforment en signaux rectangulaires de largeur déterminée égale à 1 microseconde par exemple. Ces moyens de mise en forme 24 sont préférentiellement réalisés avec des composants de surface en technologie CMOS.

Ce module de mise en forme est constitué autour de monostables du type des circuits intégrés HEF 4528 BT et HEF 4538 BT fabriqués par la société RTC.

Lors de la mise sous tension du contrôleur, les moyens de mise en forme 24 délivrent aussi sur une sortie un signal d'initialisation dont la fonction est décrite plus loin.

Les moyens de mise en forme 24 délivrent donc sur une sortie des impulsions calibrées qui sont comptées par des moyens de comptage 26 connectés par une entrée à la sortie des moyens de mise en forme 24. Ces moyens de comptae 26 sont constitués autour d'un compteur par exemple du type du circuit intégré référencé HEF 4534 fabriqué par la Société RTC. Ces moyens de comptage 26 délivrent des signaux numériques de comptage sur une sortie.

Un module d'acquisition de données 28 connecté à la sortie de la sonde 10 permet la reconnaissance automatique du type de sonde utilisé.

En effet chaque type de sonde est câblé différemment ; ce câblage constitue la signature du type de sonde qui est lue par ce module 28. Ce module 28 est constitué de deux registres par exemple du type du circuit intégré rétérencé 4076 fabriqué par la Société RTC.

Une roue codeuse, par exemple du type de celle référencée WSR-10 WAYCOM fabriquée par la Société ELCOP, fournit une valeur de seuil réglable à volonté. Cette valeur de seuil dont la fonction est décrite plus loin ainsi que le code correspondant au type de sonde utilisé sont transférés sur les registres. On dispose donc de ces informations en sortie du module 28.

Les signaux numériques de comptage délivrés par les moyens de comptage 26 sont traités par un microprocesseur 30. Ce microprocesseur peut être, par exemple, du type CDP 1802 fabriqué par la Société RCA. Ce microprocesseur est muni d'un oscillateur à quartz qui permet de constituer une horloge interne et de ses périphériques usuels : une mémoire vive (RAM du type HM 6264-15 fabriqué par la Société Hitachi par exemple), une mémoire morte (EEPROM du type 27C64 fabriqué par la Société INTEL par exemple) et des décodeurs d'adresse (des circuits intégrés référencés HEF 4042 fabriqués par la Société RTC par exemple).

Lors de la mise en fonction du contrôleur, les moyens de mise en forme 24 émettent un signal d'initialisation sur une sortie reliée à une entrée du microprocesseur 30. Ce signal permet le déclenchement de l'holorge interne du microprocesseur 30 et définit un temps initial.

Auparavant, le microprocesseur effectue une série de tests permettant de contrôler le bon fonctionnement de l'ensemble du contrôleur de contamination, et de reconnaître quel type de sonde est connecté au boîtier.

Cela permet un fonctionnement du contrôleur approprié à chaque type de sonde. Par exemple, à saturation, une sonde $\gamma$ n'émet aucune impulsion mais délivre un signal particulier de saturation. La reconnaissance du type de sonde permet d'interpréter convenablement ce genre d'évènement.

A une cadence de 4 Hz par exemple, le microprocesseur 30 enregistre les signaux numériques de comptage. Chaque enregistrement entraîne une remise à zéro des moyens de comptage 26 commandée par le microprocesseur 30.

Les mesures sont rangées dans un tableau de mesure du type pile "first IN-Last OUT" (premier entré-dernier sorti) et initialement rempli avec des valeurs nulles. Ce tableau contient quarante mesures par exemple correspondant aux comptages effectués pendant 10 s. Grâce à es quarante valeurs, différentes moyennes sont effectuées, par exemple une moyenne M1 des comptages effectués pendant 1 seconde, une moyenne M2 des comptages effectués pendant 2 secondes, une moyenn M3 des comptages effectués pendant 5 secondes, une moyenne M4 des comptages effectués pendant 10 secondes.

A chaque entrée d'une nouvelle mesure dans le tableau, les positions des valeurs sont décalées, la valeur la plus ancienne est effacée et les moyennes sont recalculées. On peut donc considérer que M1, M2, M3, M4 représentent des mesures instantanées.

Entre deux enregistrements, parmi ces moyennes M1, M2, M3, M4, le microprocesseur ne retient que celles correspondant à la plus longue durée tout en respectant un critère de stabilité déterminé que l'on va maintenant préciser.

L'étendue de mesure du contrôleur de contamination peut être divisée en cinq gammes : gamme 1 : de 0 à 1 impulsion/seconde ; gamme 2 : de 1 à 10 impulsions/seconde ; gamme 3 : de 10 à 100 impulsions/seconde ; gamme 4 : de 100 à 1000 impulsions/seconde ; gamme 5 : de 1000 à 10 000 impulsions/seconde.

En fait pour éviter des problèmes dans la détermination des changements de gamme, le passage dans une gamme supérieure s'effectue lorsque la valeur mesurée est supérieure à $1,2 \times 10^{GS-1}$ où GS représente la gamme dans laquelle on se trouve, c'est-à-dire 1, 2, 3 ou 4.

Le passage dans la gamme inférieure s'effectue lorsque la valeur mesurée est inférieure à $0,8 \times 10^{GI-2}$ où GI représente la gamme dans laquelle on se trouve, c'est-à-dire 5, 4, 3 ou 2.

Le critère de stabilité utilisé dans le choix de la moyenne dépend de la gamme dans laquelle on se trouve et déterminée par la valeur de la moyenne calculée lors de la précédente mesure.

Chaque gamme est affectée d'une des moyennes M1, M2, M3 ou M4. Par exemple, un retient la moyenne M4 en gamme 1, la moyenne M3 en gamme 2, la moyenne M2 en gamme 3, la moyenne M1 en gamme 4 et en gamme 5.

D'une manière générale, le critère de stabilité consiste à vérifier qu'on se trouve dans la bonne gamme en comparant la moyenne correspondant à la gamme aux limites $0,8 \cdot 10^{GI-2}$ et $1,2 \cdot 10^{GS-1}$ et à éventuellement passer dans la gamme convenable.

Une fois dans la gamme convenable, on calcule deux facteurs statistiques $MR + \sqrt{MR}$ et $MR - \sqrt{MR}$ où MR est la moyenne correspondant à la gamme (M1 pour les gammes 4 et 5, M2 pour la gamme 3, etc...).

On compare à ces facteurs les moyennes effectuées sur des durées plus longues que la moyenne MR correspondant à la gamme choisie (cette comparaison n'a pas lieu d'être en gamme 1 puisque la moyenne retenue est M4 effectuée sur 10 s). Cette comparaison constitue le critère de stabilité. On retient en définitive la moyenne effectuée sur la durée la plus longue et comprise entre $MR - \sqrt{MR}$ e $MR + \sqrt{MR}$ .

A titre d'exemple, on peut citer la gamme 2 où la moyenne retenue d'abord est M3. Mais si $M3 - \sqrt{M3} < M4 < M3 + \sqrt{M3}$ alors on retient M4.

Outre le nombre moyen d'impulsions par seconde, le microprocesseur 30 détermine un indicateur d'évolution instantané du nombre d'impulsions par seconde. Cet indicateur est statistique.

Deux cas sont envisagés :

1) la moyenne retenue notée MA est supérieure ou égale à une valeur limite, par exemple 0,8 impulsion par seconde. Dans ce cas, la moyenne M1 effectuée sur une durée de 1 s est comparée à un facteur statistique. Ce facteur statistique est issu de la loi de Gauss-Laplace pour un écart type de 2,5 %. M1 est d'abord comparé à $MA + 2\sqrt{MA}$ ; si M1 est supérieur à cette valeur alors l'indicateur indique une tendance à l'augmentation lu nombre d'impulsions par seconde. Dans le cas contraire, M1 est comparé à $MA-2\sqrt{MA}$ ; si M1 est inférieur à cette valeur alors l'indicateur indique une tendance à la baisse.

2) La moyenne retenue est inférieure à la valeur limite de 0,8 impulsion par seconde. Dans ce cas, la moyenne M2 effectuée sur 2 s est comparée au facteur statistique.

M2 est d'abord comparé à $MA + 2\sqrt{MA}$ ; si M2 est supérieur à cette valeur alors l'indicateur indique une tendance à la hausse. Dans le cas contraire, M2 est comparé à $MA-2\sqrt{MA}$ ; si M2 est inférieure à cette valeur alors l'indicateur indique une tendance à la baisse.

Le microprocesseur 30 commande l'affichage de ces informations sur des moyens d'affichage 32 constitués par exemple par un écran à cristaux liquides. Sur cet écran, on peut lire la valeur moyenne du nombre d'impulsions par seconde affichée par des chiffres formés de sept segments.

On peut lire aussi la valeur non moyennée correspondant à la dernière mesure effectuée. Les mesures s'effectuant toutes les 250 ms, un affichage en clair serait illisible. Cette information est donc délivrée par l'intermédiaire d'une échelle Bar-Graph constituée de petits barreaux s'affichant en nombre proportionnel à la valeur de la mesure.

Des flèches de tendance correspondent à l'indicateur d'évolution ; elle permettent de lire le comportement statistique de la moyenne.

L'afficheur présente encore un indicateur de gamme et un indicateur de saturation annonçant un dépassement de la capacité de comptage du contrôleur de contamination (en l'occurrence si le nombre d'impulsions/seconde dépasse 10 000). Dans cette situation, les trois lettres SAT sont affichées et l'affichage chiffré indique 9999. Le contrôleur ne revient en utilisation normale que lorsque le comptage devient inférieur ou égal à par exemple 9900 impulsions/seconde.

Dans la réalisation représentée sur la figure, le contrôleur est muni de moyens 34 pour engendrer plusieurs signaux à des fréquences acoustiques par exemple 512 Hz, 1024 Hz, 2048 Hz, 4096 Hz.

Ces moyens 34 générateurs de fréquences acoustiques sont connectés à des moyens de signalisation sonore : un casque 36a et un haut-parleur 36b. L'utilisateur peut à volonté utiliser l'un ou l'autre de ces moyens.

Plusieurs types de signalisation sonore sont possibles ; la description suivante d'un de ces types est donnée à titre purement illustratif et non limitatif.

Dans cette réalisation, le casque n'est utilisé qu'avec une sonde de détection 10 pour les rayonnements X. L'information sonore dépend :

a) de la gamme : les gammes 2 à 5 correspondant aux fréquences 512 Hz, 1024 Hz, 2048 Hz, 4096 Hz respectivement.

b) D'un facteur de seuil : en gamme 2, l'information sonore (fréquence continue de 512 Hz) n'est donnée qu'au-dessus d'un seuil réglable de 1 à 9 impulsions/seconde. La valeur de seuil est obtenue en réglant la roue codeuse contenue dans le module d'acquisition de données 28. Cette valeur est lue par le microprocesseur 30 qui est connecté aux moyens 34 pour engendrer des fréquences de manièr'e à les commander.

En dessous du seuil, au choix de l'utilisateur, soit aucune information sonore n'est délivrée par le casque, soit des impulsions sonores sont émises liées linéairement aux impulsions provenant de la sonde 10.

Le haut-parleur 36b fonctionne avec toutes les sondes. Il délivre des impulsions sonores liées linéairement aux impulsions provenant de la sonde 10. La durée des impulsions so ores est par exemple de 20 ms : pour un comptage sensiblement égal à 50 impulsions par seconde, l'information sonore devient continue.

Le controleur de contamination conforme à l'invention est d'une utilisation simple et délivre des informations claires et précises. Compact, d'un encombrement et d'un poids peu importants, il est portable et présente une grand autonomie : réalisé essentiellement avec des composants CMOS, sa consommation électrique est faible.

Bien entendu et comme il résulte déjà de ce qui précède, il va de soi oue l'invention ne se limite nullement aux exemples de réalisation plus spécialement décrits et représentés ; elle en admet au contaire toutes les variantes

## Revendications

1. Contrôleur de contamination comportant :
- une sonde de détection (10) délivrant sur une sortie des impulsions électriques sous l'effet d'un rayonnement,
- des moyens de traitement des impulsions électriques (20) connectés à la sortie de la sonde (10), caractérisé en ce que les moyens de traitement (20) comportent :

- des moyens de mise en forme des impulsions (24) délivrant sur une sortie des impulsions électriques de largeur calibrée,
- des moyens de comptage des impulsions calibrées (26) reliés par une entrée à la sortie des moyens de mise en forme (24) et délivrant régulièrement sur une sortie des signaux numériques de comptage,
- des moyens de commande des moyens de comptage,
- des moyens d'enregistrement des signaux numériques de comptage,
- des moyens pour effectuer à chaque enregistrement d'un signal numérique de comptage, plusieurs moyennes à partir des signaux numériques de comptage enregistrés,
- des moyens pour enregistrer ces moyennes,
- des moyens de comparaison entre ces moyennes et des facteurs statistiques, aux fins de déterminer un nombre moyen d'impulsions délivrées par la sonde par secondes et un indicateur de tendance d'évolution dudit nombre moyen d'impulsions par seconde,
- des moyens pour afficher un nombre instantané d'impulsions délivrées par la sonde, ledit nombre moyen d'impulsions par seconde, et ledit indicateur de tendance.

2. Contrôleur de contamination selon la revendication 1, caractérisé en ce qu'il comprend :
- des moyens pour engendrer plusieurs signaux à des fréquences acoustiques,
- des moyens de signalisation sonore connectés aux moyens pour engendrer des signaux à des fréquences acoustiques.

3. Contrôleur de contamination selon la revendication 1, caractérisé en ce que les moyens de traitement comportent une source d'alimentation de basse tension, cette basse tension étant délivrée sur une sortie reliée à une entrée de la sonde et en ce que la sonde comporte des moyens pour transformer la basse tension en haute tension.

4. Procédé pour la mise en oeuvre du controleur de contamination selon l'une quelconque des revendications 1 à 3, caractérisé en ce qu'il consiste à :
- enregistrer, à une cadence déterminée dans des moyens d'enregistrement les signaux numériques de comptage, cet enregistrement provoquant la remise à zéro des moyens de comptage (26),
- effectuer plusieurs moyennes des nombres d'impulsions enregistrés successivement sur une gamme de durées déterminées,
- choisir parmi ces moyennes, celles correspondant à la plus longue durée et respectant des critères de stabilité déterminés.

5. Procédé selon la revendication 4, caractérisé en ce qu'il consiste à effectuer une première moyenne M1 sur une durée de 1 s, une seconde moyenne M2 sur une durée de 2 s, une troisième moyenne M3 sur une durée de 5 s, une quatrième moyenne M4 sur une durée de 10 s.

6. Procédé selon la revendication 4, caractérisé en ce que la cadence d'enregistrement est de 4 Hz.

7. Procédé selon la revendication 4, caractérisé en ce qu'il consiste à déterminer un indicateur d'évolution instantanée par comparaison d'une moyenne des nombres d'impulsions avec des facteurs statistiques.

8. Procédé selon la revendication 7, caractérisé en ce qu'une moyenne M1 effectuée sur une durée de 1 s est comparée aux facteurs statistiques lorsque la moyenne choisie est supérieure ou égale à une valeur limite, et qu'une moyenne M2 effectuée sur une durée de 2s est comparée aux facteurs statistiques lorsque la moyenne choisie est inférieure à cette valeur limite.

9. Procédé selon la revendication 8, caractérisé en ce que la valeur limite est égale à 0,8 impulsion/seconde.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| P,X | WO-A-9 001 709  (ÖSTERREICHISCHES FORSCHUNGS-ZENTRUM SEISSERSDORF GmbH)<br>* Page 3, ligne 30 - page 12; figures *<br>— — — | 1,4,5,7 | G 01 T<br>1/208<br>G 01 T 1/17<br>G 01 T 7/12 |
| D,Y | EP-A-0 262 018  (COMMISSARIAT A L'ENERGIE ATOMI-QUE)<br>* En entier *<br>— — — | 1,4,5,7 | |
| Y | US-A-3 733 488  (COMMISSARIAT A L'ENERGIE ATOMI-QUE)<br>* En entier *<br>— — — | 1,4,5,7 | |
| A | US-A-4 618 775  (SIEMENS GAMMASONICS INC.)<br>* En entier *<br>— — — | 1-7 | |
| A | WO-A-8 604 153  (W.H. THOMS)<br>* En entier *<br>— — — | 1-7 | |
| A | US-A-3 108 207  (L. HANER et al.)<br>* En entier *<br>— — — | 1-7 | |
| A | US-A-3 126 482  (J.R. BROWN et al.)<br>* En entier *<br>— — — — — | 1,2 | **DOMAINES TECHNIQUES RECHERCHES (Int. Cl.5)**<br><br>G 01 T 1/00<br>G 01 T 7/12 |

Le présent rapport de recherche a été établi pour toutes les revendications

| Lieu de la recherche | Date d'achèvement de la recherche | Examinateur |
|---|---|---|
| La Haye | 21 janvier 91 | BROCK T.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

&: membre de la même famille, document correspondant